# EUROPEAN PATENT SPECIFICATION

(11) **EP 3 512 816 B1**
(45) Date of publication and mention of the grant of the patent: **30.12.2020**
(21) Application number: 17745462.6
(22) Date of filing: 18.07.2017
(51) Int. Cl.: C03C 3/17, C03C 4/12, C03C 4/00, H01S 3/17

(54) **GLASS COMPOSITION**
GLASZUSAMMENSETZUNG
COMPOSITION DE VERRE

(30) Priority: 21.07.2016 GB 201612637
(43) Date of publication of application: 24.07.2019
(73) Proprietor: Gooch And Housego PLC, Dowlish Ford Ilminster Somerset TA19 OPF (GB)
(72) Inventor: RICHARDS, Billy, Leeds Yorkshire LS2 9RP (GB); IRESON, Robert, Sheffield South Yorkshire S2 1WN (GB); MCGANN, Owen, Sheffield South Yorkshire S35 2PY (GB); JHA, Animesh, Leeds Yorkshire LS2 9JT (GB); GLENDENNING, Malcolm, Sheffield South Yorkshire S35 2PY (GB)
(74) Representative: Froud, Christopher Andrew
(86) International application number: PCT/GB2017/052113
(87) International publication number: WO 2018/015740

(56) References cited:
- JP-A- H03 275 529
- US-A- 4 962 067
- LIU Z ET AL: "Spectra and laser properties of Er3+, Yb3+:phosphate glasses", OPTICAL MATERIALS, ELSEVIER SCIENCE PUBLISHERS B.V. AMSTERDAM, NL, vol. 21, no. 4, 1 February 2002 (2002-02-01), pages 789-794, XP004400147, ISSN: 0925-3467, DOI: 10.1016/S0925-3467(02)00100-3

## Description

### Field

The invention relates to a glass composition, and the use of a glass composition in optical amplification, in particular as a laser gain medium.

### Background

Optical amplification is important in many applications, such as in optical or fibre amplifiers, as ASE sources, lossless splitters and in gain media. A gain medium is an important component of a laser. The gain medium determines the properties of the laser, such as the wavelength, bandwidth, tunability, efficiency and power handling capabilities. The choice of gain medium depends on the properties required for a particular application, and a wide range of gain media have been developed over the years. Modifications to the composition of the gain medium can alter the properties of the laser, allowing the properties to be optimised for a particular application.

The invention relates to solid state lasers including glass gain media, in particular to glass gain media comprising erbium-doped glasses. Lasers containing erbium-doped glasses are commonly used in fiber optic communications and also in medical applications (in particular laser surgery and dentistry). Other applications include those where there is a risk of the user looking at the laser, as the emission wavelength of around 1530 nm is eye-safe.

An example of a patent filing in this area is US 4,962,067, which describes erbium-phosphate laser glass compositions including auxiliary dopants such as ytterbium, chromium and cerium ions. The ytterbium, chromium and cerium additives serve to sensitize the erbium-doped phosphate glasses.

However, despite many years of research, these glass compositions can be improved, in particular, many compositions exhibit thermal lensing in use, requiring careful selection of the cavity mirrors such that they reflect at wavelengths shorter than the laser light, and absorbs and emits at wavelengths which are longer. It would be simpler, instead to provide a composition with a thermal properties. Further, many erbium-doped glasses require pre-melting under vacuum and it would be useful to provide a glass gain medium which can be produced by a simpler method. In addition, it would be useful to be able to use the erbium-doped glass gain material in a range of laser systems, for instance with diode pumps. The invention is intended to overcome or ameliorate at least some aspects of these problems.

### Summary

Accordingly, in a first aspect of the invention there is provided a glass composition comprising:
a) 60 - 75 mol% P₂O₅;
b) 3.7 - 7.4 mol% M¹₂O, wherein M¹ is selected from K, Li, Na and Rb;
c) 9.8 - 19.4 mol% M²O, wherein M² is selected from Ba, Mg, Ca and Sr;
d) 2.2 - 4.3 mol% Al₂O₃;
e) 0.16 - 0.3 mol% Er₂O₃;
f) 4.8 - 6.4 mol% Yb₂O₃;
g) 0.1 - 2.5 mol% CeO₂;
h) 0.1 - 0.5 mol% Nb₂O₅;
i) 0 - 0.5 mol% fining agent; and
j) 0 - 2 mol% Y₂O₃.

The value for mol% is of the whole composition.

These compositions have been found to offer optical amplification, such as through gain media which are a thermal, have the optimum doping levels for diode-pumped solid state (DPSS) lasers with side pumped configurations (allowing maximum energy efficiency and minimal media size) and are capable of being produced easily, without the need for melting under a vacuum.

The glasses of the invention are therefore phosphate glasses, P₂O₅ acting as the primary network forming / glass forming component. Phosphate glasses are commonly used in glass based laser gain mediums due to their lack of problematic absorption bands and high capacity for rare-earth species. We have found that the proportion of P₂O₅ in the overall composition has a significant effect upon the cation field strength index of the glass, which directly impacts the change in refractive index over temperature (dn/dt) for the glass. As such in the composition above the amount of P₂O₅ is higher than typical, to produce a glass which is a thermal, or in other words, a glass which demonstrates no significant change in optical properties over the operating temperature range. Often the level of P₂O₅ will be in the range 65 - 75 or 65 - 70 mol%

In the composition above, M¹₂O and M²O act as the primary network modifying species. These facilitate the formation of a glass phase and directly impact the liquidus temperature and viscosity of a glass and therefore the melting temperature of the glass. The proportion of these oxides controls the melting temperature for the glass and therefore has a significant impact upon the manufacturing process, the use of M¹₂O and M²O, in the amounts described, therefore allows the glass to be manufactured without the need for vacuum melting methods. Often M¹ is K and/or M² is Ba as K₂O and BaO are readily available, stable and hence easy to use. The amount of M¹₂O and M²O present impacts the cation field index of the final glass, where M¹ (alkali metals) have a greater impact than M² alkaline-earth species. As such in the composition above, the proportion of M¹₂O is lower than would be typical, where the proportion of M²O is higher than would be typical. Often the amount of M¹₂O is in the range 3.7 - 7.4, 4 - 6.3 or 5.5 - 6.3 mol%, and often the amount of M²O is in the range 9.14 - 9.8, or in the range 10, 12 or 15 - 17 mol%.

Al₂O₃ is added to increase the thermo-mechanical durability (resistance to temperature induced failure / thermal shock) of the glass and also significantly improves the chemical durability of the glass without interfering with the photonic processes. The presence of Al₂O₃ is desirable in photonic applications because the accumulation of thermal stress within a phosphate glass component is extremely common (due to the poor thermal conductivity of glass compared to alternatives), and Al₂O₃ minimises this problem. Often the Al₂O₃ will be present in the range 1.9 - 4.3,2.2 - 4.3, 3 - 3.9, or 3.5 - 3.9 mol%.

The primary photonically active species in the glass is Er₂O₃. As noted above, Er³⁺ ions are the species responsible for the laser transition and as such its concentration in the glass directly impacts the efficiency and laser energy output of a gain medium in a given configuration. The concentration of Er³⁺ in the composition has been optimised for DPSS laser configurations and will often be in the range 0.16 - 0.3 or 0.21 - 0.23 mol%. However, a wide variety of other ranges are also possible, depending on the mode of use of the gain medium.

Yb₂O₃ is used as a co-dopant in combination with Er³⁺. Yb³⁺ ions within the glass increase the efficiency of the Er³⁺ ions present in the glass by increasing the proportion of pump energy which is absorbed by the glass and transferring that to the excited state of the Er³⁺ ions. As with Er³⁺ the concentration of Yb³⁺ has a direct impact upon the efficiency and laser energy output of a gain medium in a given configuration. As such the concentration of Yb³⁺ in the composition has been optimised for DPSS laser configurations, for instance at 4.8 - 6.4, 5.5 - 6.4, 5.8 - 6.4 or 5.8 - 6.0 mol%. However, a wide variety of other ranges are also possible, depending on the mode of use of the gain medium.

Yttrium oxide (Y₂O₃) may also be present in the glass composition as the presence of this compound has been found to increase the florescence life-time of the Er³⁺ ion resulting in improved efficiency of the laser. Typically Y₂O₃ is present in compositions in the range 0 - 2 or 0.1 - 1.5 mol%.

Cerium oxide (CeO₂) is also present in the glass composition for its photonic properties. Ce³⁺ is known to reduce the extent of 'up-conversion' and excited state absorption (ESA) (processes that significantly reduce laser efficiency) that occurs in the Er³⁺-Yb³⁺ system. The proportion of cerium present in the glass has been optimised in order to maximise its positive photonic effects in the glass composition, and may be present in the range, 0.1 - 2.5, 0.5 - 1.5, 0.9 - 1.3 or 0.95 - 1.1 mol%.

Niobium oxide (Nb₂O₅) is added to reduce the up-take of OH⁻ ions into phosphate glass, which is beneficial since OH⁻ ions absorb at the laser emission wavelength and therefore have a significant impact upon laser efficiency. OH⁻ absorption can be avoided through the use of certain alternative glass processing techniques, although these are often more complex and expensive to use. As such, it is desirable to include Nb₂O₅ to allow the melting of the glass under atmospheric pressure. A useful range of Nb₂O₅ can be 0.1 - 0.5 or 0.2 - 0.4 mol%.

The fining agent is added to improve the quality of the glass produced. Its primary effect is to increase the rate at which bubbles are released from the glass during the melting process. A wide range of compounds can be used as the fining agent, although Sb₂O₃ is common as it is non-toxic and the absorption bands of Sb₂O₃ do not interfere with laser emission. Where present the fining agent will often be present in the range 0.1 - 0.5 mol%, more often in the range 0.1 - 0.3 mol%.

In a second aspect of the invention there is provided the use of the glass composition described in relation to the first aspect in optical amplification. For instance, in optical or fibre amplifiers, such as ASE sources, lossless splitters and in gain media. Often, the use will be as a laser gain medium. Typically, the glass composition will be used as a gain medium in a diode pumped laser, more often in a diode pumped laser of side pumped configuration.

Unless otherwise stated each of the integers described may be used in combination with any other integer as would be understood by the person skilled in the art. Further, although all aspects of the invention preferably "comprise" the features described in relation to that aspect, it is specifically envisaged that they may "consist" or "consist essentially" of those features outlined in the claims. In addition, all terms, unless specifically defined herein, are intended to be given their commonly understood meaning in the art.

Further, in the discussion of the invention, unless stated to the contrary, the disclosure of alternative values for the upper or lower limit of the permitted range of a parameter, is to be construed as an implied statement that each intermediate value of said parameter, lying between the smaller and greater of the alternatives, is itself also disclosed as a possible value for the parameter.

In addition, unless otherwise stated, all numerical values appearing in this application are to be understood as being modified by the term "about".

### Examples

An example composition in accordance with the invention is provided below:

| | **Wt%** | **Mol%** |
|---|---|---|
| **P₂O₅** | 60.35 | 66.09 |
| **K₂O** | 3.79 | 6.25 |
| **BaO** | 16.26 | 16.48 |
| **Al₂O₃** | 2.41 | 3.67 |
| **Er₂O₃** | 0.52 | 0.21 |
| **Yb₂O₃** | 14.76 | 5.82 |
| **CeO₂** | 1.08 | 0.97 |
| **Nb₂O₅** | 0.45 | 0.30 |
| **Sb₂O₃** | 0.39 | 0.21 |

This composition has been optimised for side pumped DPSS lasers, and has been found to work very efficiently as a gain medium in this configuration. Further, thermal lensing was not observed during use. We could use standard melting techniques, at atmospheric pressure, under a partially controlled atmosphere.

A further example composition of the invention is provided below:

| | **Wt%** | **Mol%** |
|---|---|---|
| **P₂O₅** | 59.44 | 65.40 |
| **K₂O** | 3.73 | 6.18 |
| **BaO** | 16.01 | 16.31 |
| **Al₂O₃** | 2.37 | 3.63 |
| **Er₂O₃** | 0.51 | 0.21 |
| **Yb₂O₃** | 14.54 | 5.76 |
| **CeO₂** | 1.05 | 0.96 |
| **Nb₂O₅** | 0.44 | 0.30 |
| **Sb₂O₃** | 0.39 | 0.21 |
| **Y₂O₃** | 1.50 | 1.04 |

This composition was found to have similar properties to the composition above, with an excellent florescence life-time of the Er³⁺.

It should be appreciated that the glass of the invention is capable of being implemented in a variety of ways, only a few of which have been illustrated and described above.

## Claims

1. A glass composition comprising:
a) 60 - 75 mol% P₂O₅;
b) 3.7 - 7.4 mol% M¹₂O, wherein M¹ is selected from K, Li, Na and Rb;
c) 9.8 - 19. 4 mol% M²O, wherein M² is selected from Ba, Mg, Ca and Sr;
d) 2.2 - 4.3 mol% Al₂O₃;
e) 0.16 - 0.3 mol% Er₂O₃;
f) 4.8 - 6.4 mol% Yb₂O₃;
g) 0.1 - 2.5 mol% CeO₂;
h) 0.1 - 0.5 mol% Nb₂O₅;
i) 0 - 0.5 mol% fining agent; and
j) 0 - 2 mol% Y₂O₃.

2. A composition according to claim 1, wherein M¹ is K.

3. A composition according to claim 1 or claim 2, wherein M² is Ba.

4. A composition according to claim any preceding claim, wherein the fining agent is Sb₂O₃.

5. Use of the glass composition of any preceding claim in optical amplification.

6. Use of the glass composition of claim 5 as a laser gain medium.

## Patentansprüche

1. Glaszusammensetzung, enthaltend:
a) 60 - 75 Molprozent P₂O₅,
b) 3,7 - 7,4 Molprozent M¹₂O, wobei M¹ ausgewählt ist aus K, Li, Na und Rb,
c) 9,8 - 19,4 Molprozent M²O, wobei M² ausgewählt ist aus Ba, Mg, Ca und Sr,
d) 2,2 - 4,3 Molprozent Al₂O₃,
e) 0,16 - 0,3 Molprozent Er₂O₃,
f) 4,8 - 6,4 Molprozent Yb₂O₃,
g) 0,1 - 2,5 Molprozent CeO₂,
h) 0,1 - 0,5 Molprozent Nb₂O₅,
i) 0 - 0,5 Molprozent Läuterungsmittel und
j) 0 - 2 Molprozent Y₂O₃.

2. Zusammensetzung nach Anspruch 1, wobei M¹ K ist.

3. Zusammensetzung nach Anspruch 1 oder 2, wobei M² Ba ist.

4. Zusammensetzung nach einem der vorangehenden Ansprüche, wobei das Läuterungsmittel Sb₂O₃ ist.

5. Verwendung der Glaszusammensetzung nach einem der vorangehenden Ansprüche zur optischen Verstärkung.

6. Verwendung der Glaszusammensetzung nach Anspruch 5 als Laserverstärkungsmedium.

## Revendications

1. Composition de verre comprenant :
a) 60 - 75 % en moles de P₂0₅ ;
b) 3,7 - 7,4 mol% M¹₂O, où M¹ est sélectionné parmi K, Li, Na et Rb ;
c) 9,8 - 19,4 mol% M²O, où M² est sélectionné parmi Ba, Mg, Ca et Sr ;
d) 2,2 - 4,3 % en moles de Al₂0₃ ;
e) 0,16 - 0,3 mol% Er₂0₃ ;
f) 4,8 - 6,4 mol% Yb₂0₃ ;
g) 0,1 - 2,5 mol% CeO₂,
h) 0,1 - 0,5 mol% Nb₂0₅ ;
i) 0 - 0,5 mol% d'agent de collage ; et
j) 0-2 mol% Y₂O₃.

2. Composition selon la revendication 1,
dans laquelle M¹ est K.

3. Composition selon la revendication 1 ou la revendication 2,
dans laquelle M² est Ba.

4. Composition selon la revendication 1 ou la revendication 2,
dans laquelle M² est Sb₂0₃.

5. Utilisation de la composition de verre de l'une quelconque des revendications précédentes,
dans l'amplification optique.

6. Utilisation de la composition du verre selon la revendication 5, comme moyen de gain laser.
